# EUROPÄISCHE PATENTSCHRIFT

(11) **EP 1 529 427 B1**
(45) Veröffentlichungstag und Bekanntmachung des Hinweises auf die Patenterteilung: **30.07.2008**
(21) Anmeldenummer: 04025846.9
(22) Anmeldetag: 30.10.2004
(51) Int. Cl.: A01B 63/32, A01B 29/04

(54) **Landwirtschaftliches Bodenbearbeitungsgerät und/oder Bestellgerät**
Agricultural soil cultivating machine and/or sowing machine
Machine agricole à travail du sol et/ou de semis

(30) Priorität: 05.11.2003 DE 10352185
(43) Veröffentlichungstag der Anmeldung: 11.05.2005
(73) Patentinhaber: Amazonen-Werke H. Dreyer GmbH & Co. KG, 49205 Hasbergen (DE)
(72) Erfinder: Tiessen, Reimer-Uwe, 26135 Oldenburg (DE); Feldhaus, Werner, 27801 Dötlingen/Geveshausen (DE); Stehen, Rüdiger, 27798 Hude (DE); Hoffmann, Karl-Peter, 27798 Hude (DE)

(56) Entgegenhaltungen:
- EP-A- 0 327 869
- EP-A- 1 285 564
- WO-A-85/05246
- WO-A2-20/04073381
- DE-A- 10 141 991
- DE-U- 9 010 178
- US-A- 4 354 688

## Beschreibung

Die Erfindung betrifft ein landwirtschaftliches Bodenbearbeitungs- und/oder Bestellgerät gemäß des Oberbegriffes der Patentanspruches 1.

Ein landwirtschaftliches Bodenbearbeitungs- und/oder Bestellgerät gemäß des Oberbegriffes des Patentanspruches 1 ist beispielsweise durch die deutsche Offenlegungsschrift 101 41 991 A1 bekannt. Bei diesem Gerät sind die das Fahrwerk bildenden Reifenelemente an relativ langen Schwingen befestigt und direkt am Rahmen angelenkt. Die übrigen Reifenelemente der Bodenwalze sind in anderer Weise am Rahmen angelenkt. Hierdurch ergeben sich unterschiedliche Ausweichbewegungen der verschiedenen Reifenelemente.

Des weiteren ist in der DE 101 41 232 A1 ein anderes Gerät bekannt. Dieses Gerät weist ein separates Fahrwerk auf. Mittels der Bodenwalze werden über Verbindungselemente die hinter der Bodenwalze angeordneten Säschare in der Tiefe geführt.

Der Erfindung liegt die Aufgabe zugrunde, eine vorteilhafte Ausgestaltung des Fahrwerkes für ein Bodenbearbeitungs- und/oder Bestellgerät gemäß Gattungsbegriff zu schaffen.

Diese Aufgabe wird durch die Merkmale des Kennzeichens des Patentanspruches 1 gelöst. Infolge dieser Maßnahmen ist es möglich, sämtliche Reifenelemente, nämlich die Reifenelemente sowohl des Fahrwerkes wie auch die übrigen Reifenelemente der Bodenwalze mit den Schwenkarmen derart anzulenken, dass deren Gelenke, um den die Schwenkarme mit den Reifenelementen während des Betriebes sich zu einander bewegen und der Bodenoberfläche folgen, von der Seite gesehen in einer Flucht liegen.

Damit sich in Transportposition des Gerätes, wenn die Reifenelemente des Fahrwerkes gegenüber den übrigen Reifenelementen abgesenkt sind, sich die gesamte Maschine nicht über die Hydraulikzylinder des Druckausgleichsystems abstützen müssen, ist vorgesehen, dass zwischen den Zwischenschwenkarmen und den Schwenkarmen der Reifenelemente des Fahrwerkes der Reifenelemente des Fahrwerkes der Fahrwerksposition der Reifenelemente wirksame Anschlagelemente angeordnet sind. Infolge dieser Maßnahme stützen sich die Schwenkarme der Reifenelemente des Fahrwerkes in Transportposition über die Anschlagelemente direkt auf die Zwischenschwenkarme ab.

Eine vorteilhafte Anlenkung der Zwischenschwenkarme wird dadurch erreicht, dass die Zwischenschwenkarme vor den Reifenelementen am Tragarm angelenkt sind.

Eine vorteilhafte Anlenkung der Schwenkarme der Reifenelemente für das Fahrwerk wird dadurch erreicht, dass die Schwenkarme hinter dem Anlenkpunkt der Zwischenschwenkarme an dem Tragrahmen an den Zwischenschwenkarmen angelenkt sind.

Eine einfache Anordnung der Hydraulikzylinder des Druckausgleichsystems für die Reifenelemente des Fahrwerkes wird dadurch erreicht, dass die Hydraulikzylinder des Druckausgleichsystems zwischen den Schwenkarmen und den Zwischenschwenkarmen angeordnet sind.

Um eine einfache und robuste Ausgestaltung und Aushebung der Maschine über die Zwischenschwenkarme zu gewährleisten, ist vorgesehen, dass die motorischen Stellelemente als Hydraulikzylinder ausgebildet sind.

Eine einfache Anordnung des Stellelementes für das Fahrwerk wird dadurch erreicht, dass das Stellelement des Fahrwerkes an dem Schwenkrahmen angreift.

Eine einfache und vorteilhafte Ausgestaltung der Zwischenschwenkarme lässt sich dadurch erreichen, dass die Zwischenschwenkarme als Kipphebel ausgebildet sind.

Ein vorteilhaftes Ausheben des Gerätes wird dadurch erreicht, dass die Zwischenschwenkarme und die Schwenkarme um ihre Schwenkachsen von der Arbeits- in die Fahrwerksposition nach vorn- unten verschwenkbar sind.

Des weiteren ist einer weiteren Ausgestaltung und Lösung der erfindungsgemäßen Aufgabe vorgesehen, dass die zwischen den das Fahrwerk bildenden Reifenelementen und den zugeordneten Säscharen angeordneten Verbindungselemente längenveränderbar ausgebildet sind.

Infolge dieser Maßnahme kann die Maschine über die Reifenelemente, die zusätzlich die Säschare über das zugeordnete Verbindungselement in der Tiefe führen, die Maschine ausgehoben werden und gleichzeitig erreichen die Säschare einen ausreichenden Abstand in ihrer Transportposition zum Boden.

Eine einfache Ausgestaltung der längenveränderbaren Verbindungselemente lässt sich dadurch erreichen, dass die Verbindungsstangen aus zwei gelenkig miteinander verbundenen Teilstangen bestehen.

Damit in Arbeitsposition eine sichere Führung der Säschare durch das längenveränderbare Verbindungselement erreicht wird, ist vorgesehen, dass ein zwischen den beiden Teilstangen wirksames Federelement angeordnet ist, welches die Teilstangen zusammen zieht.

In einer weiteren Ausgestaltung eines längenveränderbaren Verbindungselementes ist vorgesehen, dass die Verbindungsstange aus zwei zueinander teleskopierbaren Teilstangen bestehen.

Ein für das Bodenbearbeitungs- und Bestellgerät mit einer vorteilhafte Hydraulikanlage wird durch die Merkmale des Anspruches 13 erreicht. Infolge dieser Maßnahme wird sicher gestellt, dass beim Ausheben des Gerätes die Flüssigkeit in dem Druckausgleichssystem in die Ausgleichszylinder gelangt, wenn die Reifenelemente des Fahrwerkes in Transportstellung gebracht werden und andererseits die Flüssigkeit des Druckausgleichssystem, aus dem Ausgleichszylinder in die Hydraulikzylinder des Druckausgleichssystems zum Ausgleich der einzelnen Reifenelemente untereinander, gebracht wird.

Um ein stabiles Fahrverhalten des Gerätes über das Druckausgleichsystem für das Gerät zu erreichen, ist vorgesehen, dass die Hydraulikzylinder des Druckausgleichsystems für die Reifenelemente jeder Hälfte des Gerätes in einem geschlossenen Leitungssystem angeordnet sind, dass in jedem Leitungssystem des Druckausgleichsystems zumindest ein doppeltwirkender Hydraulikzylinder als Ausgleichszylinder angeordnet ist.

Um in den Fällen, bei denen es nicht ausreichend ist, dass die Schare bei dem einfachen Absenken der Reifenelemente gegenüber den übrigen genügend hoch ausgehoben werden können, ein weiteres Anheben der Schare zu erreichen, ist vorgesehen, dass ein weiterer Hydraulikzylinder zwischen dem Scharrahmen und dem Tragrahmen angeordnet ist, dass dieser dem Scharrahmen zugeordnete Hydraulikzylinder mit den Hydraulikanschlüssen für den Fahrwerkszylinder verbunden ist. Infolge dieser Maßnahmen wird durch den zusätzlichen Hydraulikzylinder, der zwischen dem Scharrahmen und dem Tragrahmen angeordnet ist, der Scharrahmen mit den Säscharen zusätzlich weiter ausgehoben.

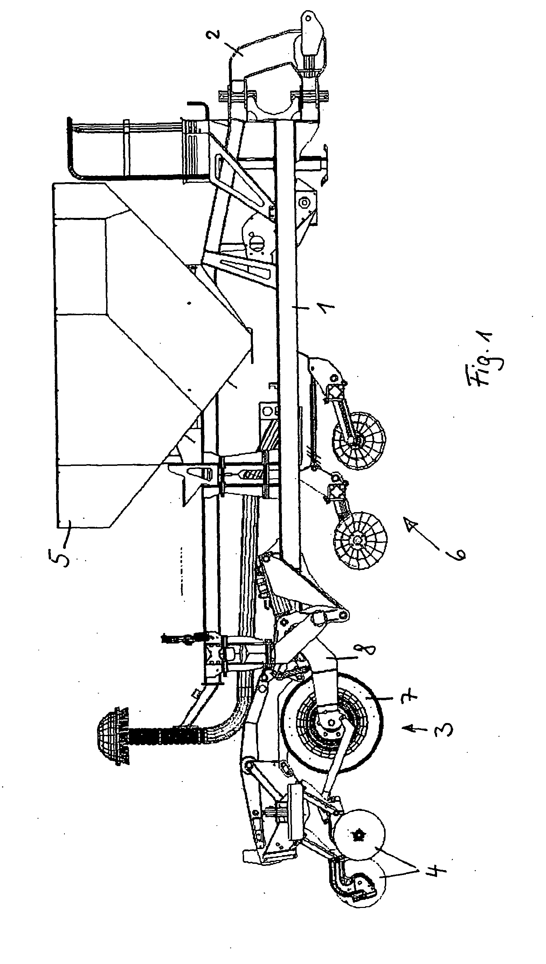

Weitere Einzelheiten der Erfindung sind den übrigen Unteransprüchen, der Beispielsbeschreibung und den Zeichnungen zu entnehmen. Hierbei zeigen
- Fig. 1: das Bodenbearbeitungs- und/oder Bestellgerät in Seitenansicht und Prinzipdarstellung,
- Fig. 2: die Bodenwalze mit zugeordneten Säscharen in Seitenansicht und Arbeitsstellung,
- Fig. 3: schematische Darstellung der Anlenkung der Bodenwalze und Säschare in Seitenansicht und Arbeitsposition,
- Fig. 4: die Bodenwalze in der Ansicht IV - IV in Arbeitsstellung,
- Fig. 5: die Bodenwalze mit zugeordneten Säscharen in der Draufsicht und in Arbeitsstellung,
- Fig. 6: die Bodenwalze mit zugeordneten Säscharen in der Ansicht von unten,
- Fig. 7: die Zuordnung von Bodenwalze und Säscharen in vergrößerter Darstellung in Seitenansicht gemäß Fig. 2,
- Fig. 8: die Zuordnung von Bodenwalze und Säscharen in Seitenansicht jedoch mit einem abgenommenen Säschar,
- Fig. 9: die Bodenwalze mit zugeordneten Säscharen in Seitenansicht und Transportstellung,
- Fig. 10: schematische Darstellung der Anlenkung der Bodenwalze und Säschare in Seitenansicht in der ersten Phase von Kippstellung aus Arbeits- in Transportposition
- Fig. 11: schematische Darstellung der Anlenkung der Bodenwalze und Säschare in Seitenansicht und Transportposition,
- Fig. 12: die Bodenwalze in der Ansicht XII - XII in Transportstellung,
- Fig. 13: die Bodenwalze mit zugeordneten Säscharen in der Draufsicht in Transportstellung,
- Fig. 14: die Bodenwalze mit zugeordneten Säscharen in der Ansicht von unten,
- Fig. 15: die Zuordnung von Bodenwalze und Säscharen in vergrößerter Darstellung in Seitenansicht gemäß Fig. 9,
- Fig. 16: die Zuordnung von Bodenwalze und Säscharen in Seitenansicht jedoch mit einem abgenommenen Säschar,
- Fig. 17: den Hydraulikschaltplan für die Säschare und die Reifenelemente, wobei sich die Reifenelemente des Fahrwerkes in Arbeitsstellung befinden und
- Fig. 18: den Hydraulikschaltplan für die Säschare und die Reifenelemente, wobei sich die Reifenelemente des Fahrwerkes in Transport- Fahrstellung befinden.

Das landwirtschaftliche Bodenbearbeitung- und/oder Bestellgerät ist als Bestellkombination ausgebildet und weist den Rahmen 1, die auf der Vorderseite des Rahmens 1 angeordnete Zugdeichsel 2 sowie die auf der Rückseite des Rahmens 1 angeordnete Bodenwalze 3 mit den Säscharen 4 auf. Auf dem Rahmen 1 ist der Vorratsbehälter 5 angeordnet, von dem aus über nur teilweise dargestellte Dosier- und Förderorgane und Verteileinrichtungen sowie Leitungen den Säscharen 4 das sich im Vorratsbehälter 5 befindliche Saatgut in einstellbaren Mengen zugeleitet wird. Vor der Bodenwalze 3 kann an dem Rahmen 1, wie im Ausführungsbeispiel dargestellt ein Bodenbearbeitungsgerät 6 angeordnet sein.

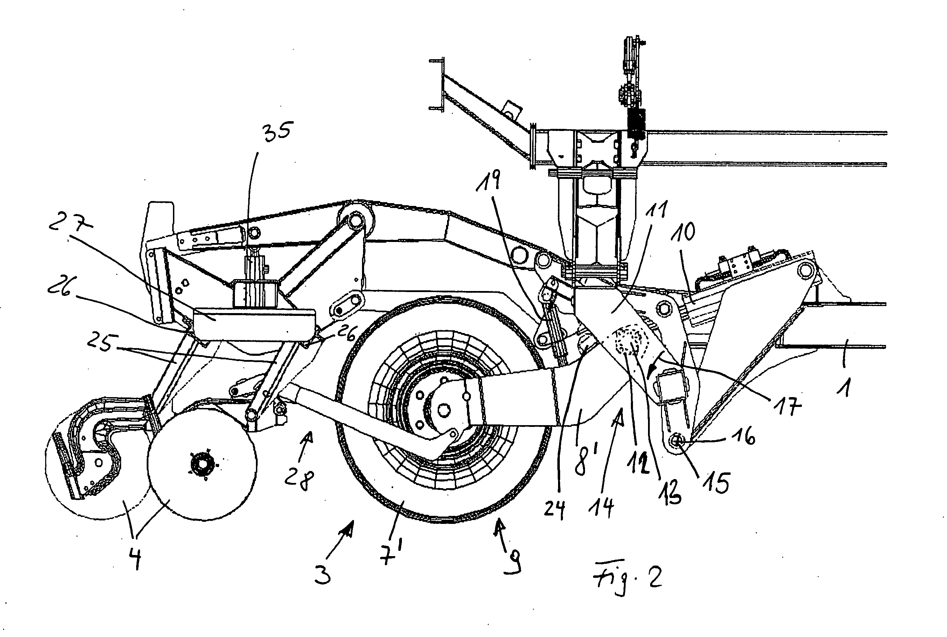

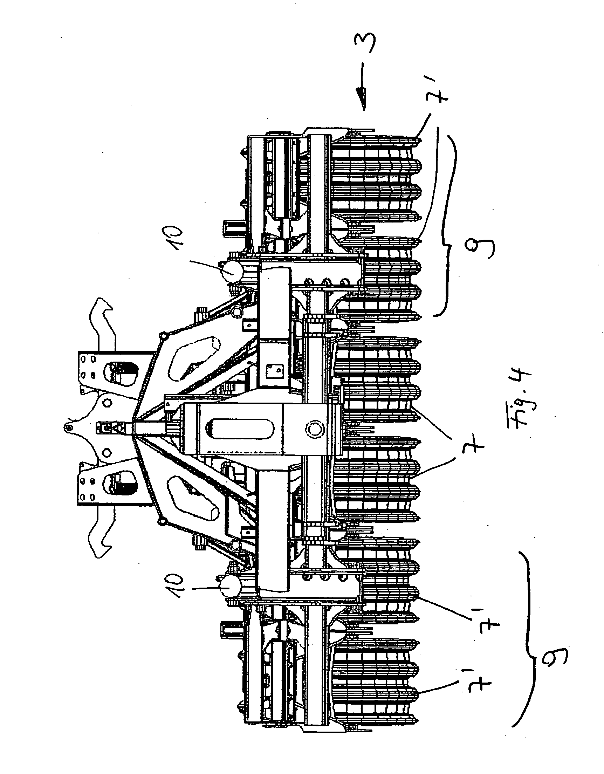

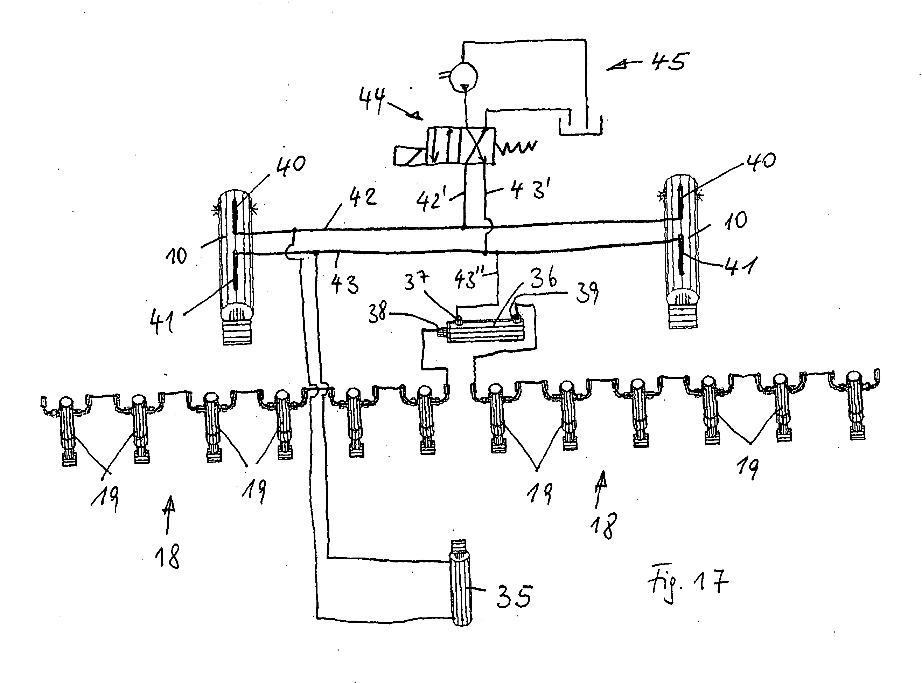

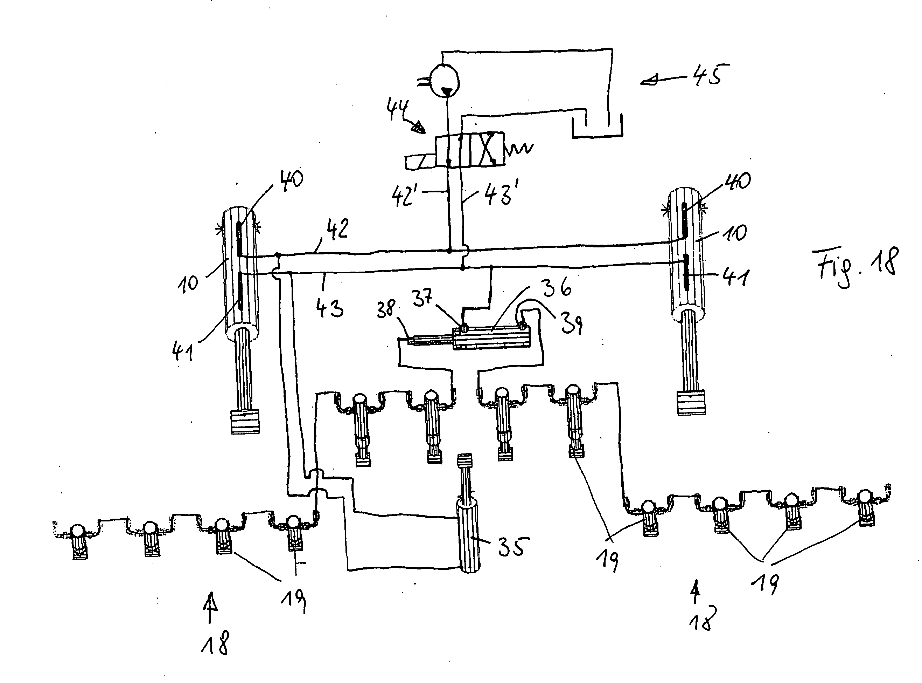

Die Bodenwalze 3 besteht aus den nebeneinander angeordneten und auf dem Boden abrollenden Reifenelementen 7. Die einzelnen Reifenelemente 7 sind mittels Schwenkarme 8' am Rahmen 1 befestigt. Einige der Reifenelemente 7 bilden als "Laufräder" oder "Transporträder" das Fahrwerk 9 des Gerätes. Die Reifenelemente 7' des Fahrwerkes 9 sind gegenüber den anderen Reifenelementen 7 nach unten mittels motorischer Stellelemente 10 verschwenkbar . Hierbei sind die das Fahrwerk 9 bildenden Reifenelemente 7' zugeordneten Schwenkarme 8' über Zwischenschwenkarme 11 an dem Rahmen 1 befestigt. Die Schwenkarme 8' Reifenelemente 7' des Fahrwerks 9 sind über gummielastische Lagerungen 12 an einem Querbalken 13 befestigt. Dieser Querbalken 13 ist an den Zwischenschwenkarmen 10, die über Querträger zu einem Zwischenschwenkrahmen 14 zusammengefasst sind, mittels des zwischen dem Zwischenschwenkrahmen 14 und dem Rahmen 1 angeordneten als Hydraulikzylinder ausgebildeten Stellelement 10 aus der in Fig. 2 dargestellten Arbeitsstellung in die in Fig. 4 dargestellte Transportstellung zu verschwenken. Hierbei schwenkt der Zwischenschwenkrahmen 14 um die durch das Gelenk 15, mittels welchen die Zwischenschwenkarme 11 des Schwenkrahmens 14 an dem Rahmen 1 angeordnet sind, verlaufenden Schwenkachse 16 von hinten-oben nach vorn-unten, wie durch den Pfeil 17 dargestellt ist. Die Hydraulikzylinder sind als motorische Stellelemente 10 ausgebildet. Die Zwischenschwenkarme 11 sind als Kipphebel ausgebildet. Die Schwenkarme 8' sind hinter dem Anlenkpunkt 15 der Zwischenschwenkarme 11 an dem Rahmen 1 an den Zwischenschwenkarmen 11 angelenkt. Die einzelnen Reifenelemente 7, 7' sind mittels eines Druckausgleichssystems 18 verbunden. Dieses Druckausgleichssystem weist Hydraulikzylinder 19 auf, die zwischen dem Anlenkpunkt 15 des Zwischenschwenkrahmens 14 an dem Tragrahmen 1 abgewandten Ende 20 und den Schwenkarmen 8 angeordnet sind. Die Verbindung der einzelnen Hydraulikzylinder 19 des Druckausgleichssystems 18 ist in den Fig. 17 und 18 dargestellt.

Die Schwenkarme 8 der nicht dem Fahrwerk 9 zugeordneten Reifenelemente 8 sind an einem Querbalken 21 angelenkt, der ebenfalls mit dem Rahmen 1 verbunden ist. Diese Anlenklagerung 22 weist ebenfalls Gummifederelemente auf, so dass die Schwenkarme 8 im begrenzten Umfang gegen die Federkraft der Gummifederelemente ausweichen können. Des weiteren sind zwischen den Schwenkarmen 8 und dem Rahmen 1 ebenfalls Hydraulikzylinder 19 des Druckausgleichssystems 18 angeordnet. Die Schwenkachse 23 der Anlenklagerung 22 mittels welchem die Schwenkarme 8 der nicht dem Fahrwerk 9 zugeordneten Reifenelemente 8 angelenkt sind, fluchtet in der Arbeitsstellung der Reifenelemente 7' des Fahrwerks 9 mit der Schwenkachse 8' des Gelenkes, mittels welchem die Schwenkarme der Reifenelemente 7' des Fahrwerkes 9 an den Zwischenschwenkarmen 11 bzw. dem Querbalken 13 angeordnet sind.

Zwischen dem Zwischenschwenkarmen 11 und den Schwenkarmen 8' des Fahrwerks 9 sind Anschlagelemente 24 angeordnet, die wirksam werden, wenn die Reifenelemente 7' des Fahrwerkes 9 über den Zwischenschwenkrahmen 14 in Transportstellung gebracht werden. Diese Anschlagelemente 24 können beispielsweise als Silikon- oder Gummiblöcke ausgebildet sein.

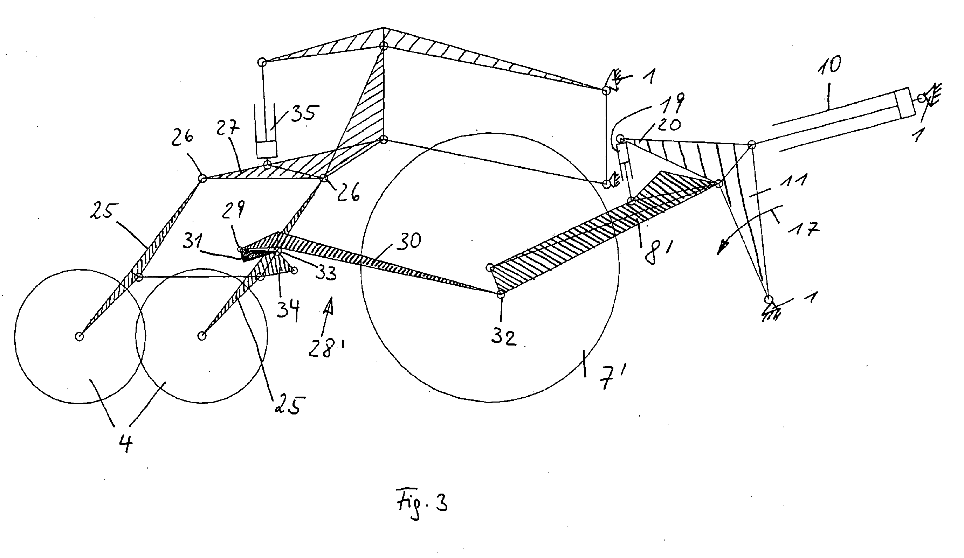

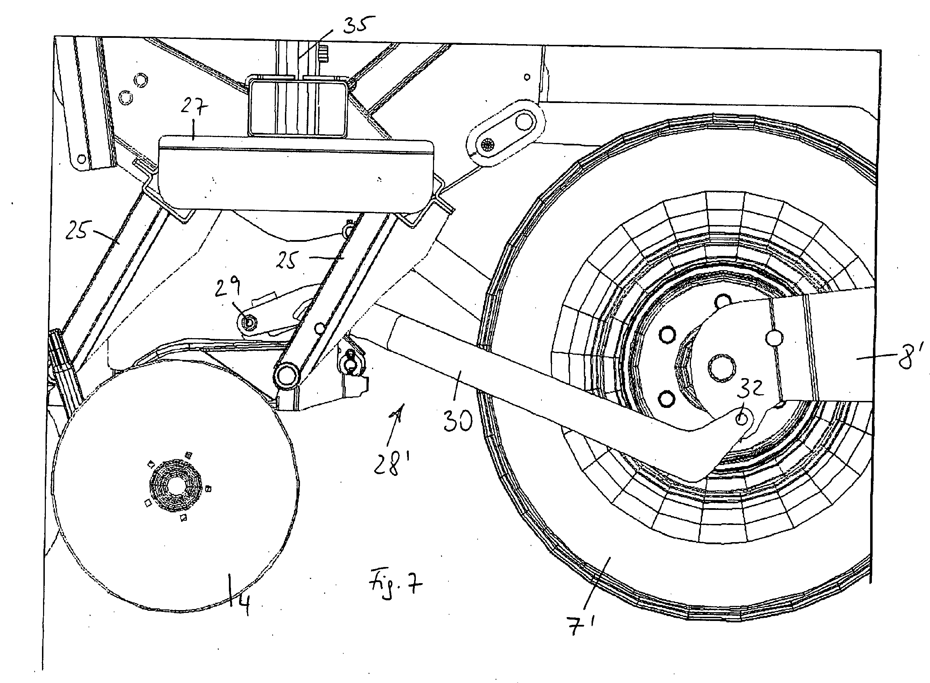

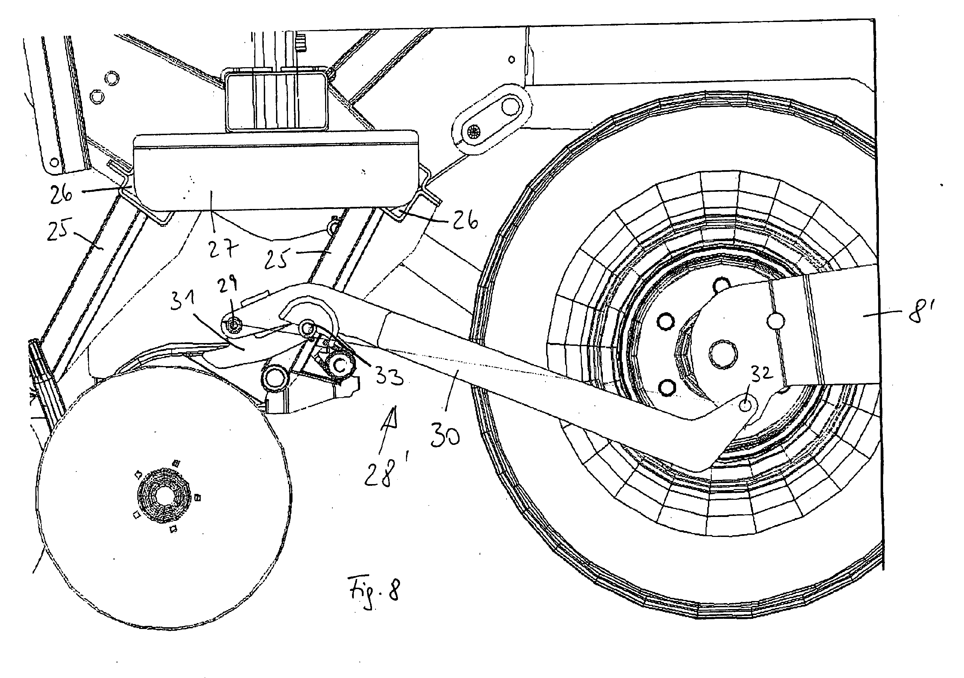

Hinter den Reifenelementen 7, 7' der Bodenwalze 3 sind die Säschare 4 mittels parallelogrammartiger Halterungen 25 über Gelenke 26 an einem Zwischenrahmen 27 an dem Rahmen 1 des Gerätes angeordnet. Zwischen den Halterungen 25 der Säschare 4 und den Schwenkarmen 8 der Reifenelemente 7, 7' sind Verbindungselemente 28 angeordnet. Mittels dieser Verbindungselemente 28 werden die Säschare 25 von den vorlaufenden Reifenelementen 7, 7' in ihrer Eindringtiefe in den Boden geführt. Die Verbindungselemente 28' zwischen den Reifenelementen 7' des Fahrwerkes 9 sind längenveränderbar ausgebildet. Die als längenveränderbare Verbindungsstangen 28' ausgebildeten Verbindungselemente bestehen aus zwei gelenkig mittels des Gelenkes 29 miteinander verbundenen Teilstangen 30 und 31. Zwischen den beiden Teilstangen 30 und 31 ist ein nicht dargestelltes, wirksames Federelement angeordnet, welches die Teilstangen 30 und 31 zusammenzuziehen versucht, so dass sie in die in den Fig. 2, 3, 7 und 8 dargestellte Position gezogen werden. In der Arbeitsstellung der Reifenelemente 7' des Fahrwerkes 9 und der Säschare 25 befindet sich der durch das Gelenk 29 verlaufende Drehpunkt der Teilstangen 30 und 31 unterhalb der Verbindungslinie zwischen den Gelenken 32 und 33, mittels welchem die Verbindungsstangen 30, 31 am Schwenkarm 8' und an den Halterungen 25 der Säschare 4 angeordnet ist. Hierbei liegt die an dem Schwenkarm 8' der Reifenelemente 7' angeordnete Teilstange 30 auf den an der Halterung 25 der Säschare 4 angeordneten Anschlag 34 auf. Dadurch, dass der Drehpunkt der die Teilstangen 30,31 miteinander verbindenden Gelenke 29 unterhalb dieser Verbindungslinie liegt, sind die Teilstangen 30,31 quasi in Arbeitsstellung als starre Stange anzusehen, so dass eine genaue Tiefenführung der Säschare 4 durch die Reifenelemente 7' erreicht wird und auch die Teilstangen 30, 31 die Säschare 4 in den Boden ziehen kann. Dadurch, dass während des Verschwenkens der Reifenelementes 7' des Fahrwerkes 9 in Transportstellung ein anderes kinematisches Verhältnis und Hebelverhältnis auftritt, wandert das Gelenk 29, mittels welchem die beiden Teilstangen 30, 31 miteinander verbunden sind, oberhalb der Verbindungslinie, so dass die Verbindungsstange 28' mit ihren beiden Teilstangen 30, 31 in eine gestreckte Stellung der Teilstangen 30, 31 gezogen werden kann, so dass sich eine Verlängerung der Verbindungsstange 28' ergibt. Hierdurch können einerseits die Säschare 4 ausgehoben und andererseits die Reifenelemente 7' des Fahrwerkes 9 abgesenkt werden.

Zwischen dem Rahmen 1 und dem Halterungsrahmen 27 der Säschare 4 ist ein Hydraulikzylinder 35 angeordnet, um zusätzlich die Säschare 4 für den Transport anheben zu können.

In dem Hydrauliksystem des Druckausgleichssystem 18 sind noch zwei Ausgleichszylinder zu einem Zylinder 36 vereinigte angeordnet, wie Fig. 17 und 18 zeigen. Die Funktionsweise des Hydrauliksystems ist folgende:

Das Hydrauliksystem weist ein rechtes und ein linkes Druckausgleichssystem 18 auf, in welchem die den einzelnen Schwenkarmen 8, 8' der Reifenelemente 7, 7' zugeordnete Hydraulikzylinder 19 angeordnet sind, so dass die Reifenelemente 7, 7' sich der Bodenoberfläche anpassen können, damit alle Reifenelemente 7, 7' mit dem gleichen Druck gegen den Boden drücken. Jedem Druckausgleichssystem 18 ist ein Ausgleichszylinder 36 im Ausführungsbeispiel sind die beiden doppelt wirkenden Hydraulikzylinder die als Ausgleichszylinder 36 wirken in einem Hydraulikzylinder 37, 38, 39 mit drei Anschlüssen und entsprechend getrennten Kammern angeordnet. Des weiteren ist in dem Hydrauliksystem für jede Fahrwerksseite ein Aushubzylinder 10 mit den Hydraulikanschlüssen 40 und 41 angeordnet, die jeweiligen Seiten des Hydraulikzylinders 10 sind an gemeinsame Leitungen 42 und 43 angeschlossen und über Zweigleitung 42' und 45' und ein Schaltventil 44 an eine Hydraulikanlage 45 angeschlossen. An die Seite des Hydraulikzylinders 10, welche die Reifenelemente 7' des Fahrwerkes 9 in Arbeitsstellung bringt, ist mittels einer Zweigleitung 43" der bzw. die Ausgleichszylinder 36 angeordnet. Des weiteren ist der Scharaushubzylinder 35 an die beiden Leitungen 42 und 43 der Hydraulikzylinder 10 des Fahrwerkes 9 entsprechend Fig. 17 angeordnet.

Wenn das Gerät sich in Arbeitsstellung befindet, ist das Hydraulikventil 44 in die in Fig. 17 eingezeichnete Stellung geschaltet. Hierdurch sind die Hydraulikzylinder 10, die dem Fahrwerk 9 zugeordnet sind, eingefahren. Gleichzeitig ist das Öl aus dem Ausgleichszylinder 36 über die Leitung aus dem Zylinder 36 herausgedrückt und in das jeweilige Druckausgleichssystem hineingeleitet. Weiterhin sind über den Scharaushubzylinder 35 die Säschare 4 abgesenkt.

Wenn das Gerät transportiert werden soll, müssen die Reifenelemente 7' des Fahrwerks 9 in Transport- bzw. Fahrstellung gebracht werden. D.h. die Reifenelemente 7' des Fahrwerkes 9 müssen gegenüber den übrigen Reifenelementen 7 abgesenkt werden. Hierzu wird das Ventil 44 in die in Fig. 18 dargestellte Stellung gebracht. Hierdurch wird die Leitung mit Druck beaufschlagt, so dass die Hydraulikzylinder 10 des Fahrwerks 9 ausgefahren werden. Hierbei wird zunächst das Öl aus den Hydraulikzylindern 19 des Druckausgleichssystems 18, die den Reifenelementen 7' des Fahrwerkes 9 zugeordnet sind, herausgedrückt. Dieses Öl fließt in die Kammern des Ausgleichszylinders 36 und das Öl strömt aus der anderen Kammer des Ausgleichszylinders 36 über die Leitungen in die Hydraulikanlage 45 zurück. Gleichzeitig werden die Hydraulikzylinder 37 des Scharrahmens 27 mit Druck beaufschlagt, so dass die Säschare 25 über den Scharrahmen 27 gegenüber den Reifenelementen 7 zusätzlich ausgehoben werden. Dadurch dass das Öl aus den Hydraulikzylindern 19 des Druckausgleichssystems 18, der den Fahrwerk 9 zugeordneten Reifenelementen 7' herausfließt, kommen die Anschläge 24 an den Schwenkarmen 8 zu Anlage. Die Hydraulikzylinder 10 des Fahrwerks 9 werden solange mit Druck beaufschlagt, bis die Reifenelemente 7' des Fahrwerks 9 sich in Transportstellung beifindet.

Um das Gerät aus der Fahrstellung, d.h. die Reifenelemente 7' des Fahrwerks 9 in die gleiche Ebene der übrigen Reifenelemente 7 für die Arbeitsstellung zu bringen, sowie die Säschare 4 abzusenken wird das Hydraulikventil 44 wieder in die in Fig. 17 dargestellte Position gebracht. Hierdurch fährt der Hydraulikzylinder 35 des Scharrahmens 27 ein, so dass die Säschare 25 abgesenkt werden. Weiterhin werden die Hydraulikzylinder 10, die dem Fahrwerk 9 zugeordnet sind, eingefahren, so dass die Reifenelemente 7' des Fahrwerkes 9 in die gleiche Ebene der übrigen Reifenelemente 7 in Arbeitsposition gebracht werden. Gleichzeitig wird der Anschluss des Ausgleichszylinders 36 mit Öldruck beaufschlagt, so dass Öl über die Leitungen in den Ausgleichszylinder 36 fließt und das Öl des Druckausgleichssystems 18 bzw. der Druckausgleichssysteme 18 über die Leitungen über das Druckausgleichssysteme 18 über die Leitungen in das Druckausgleichssystem 18 der Reifenelemente 7' zurückgedrückt wird, so dass die Schwingen 10 von den Anschlägen 24 abheben.

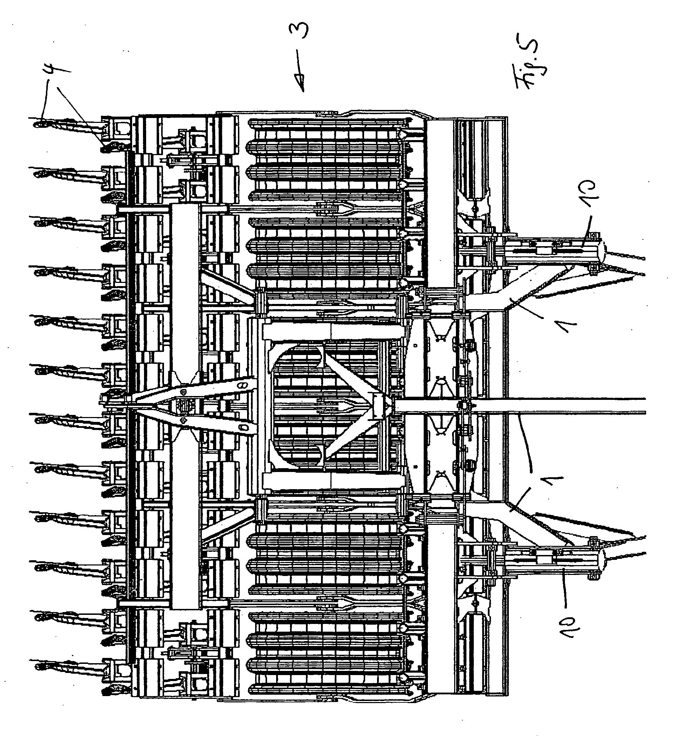

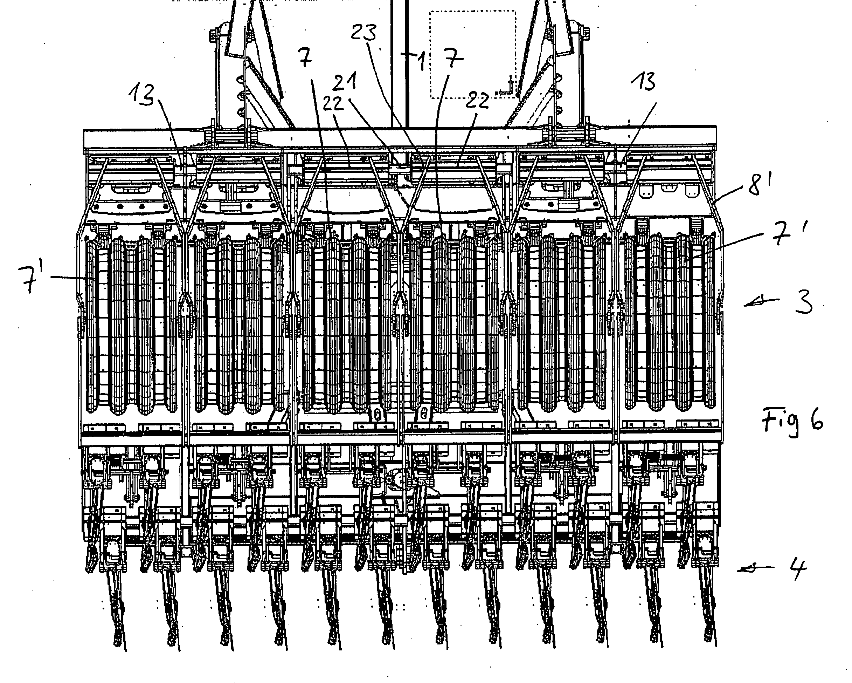

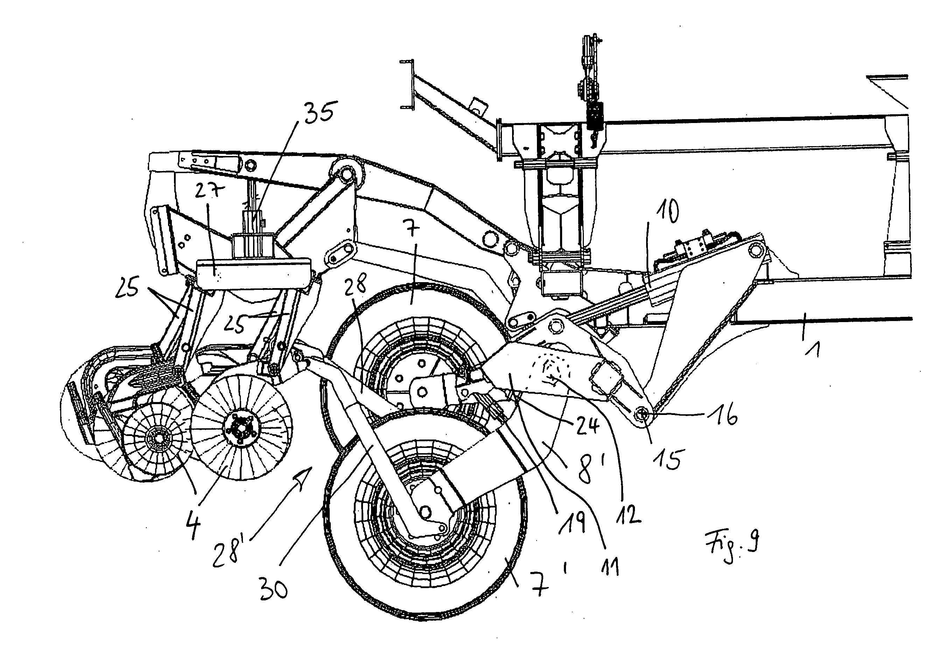

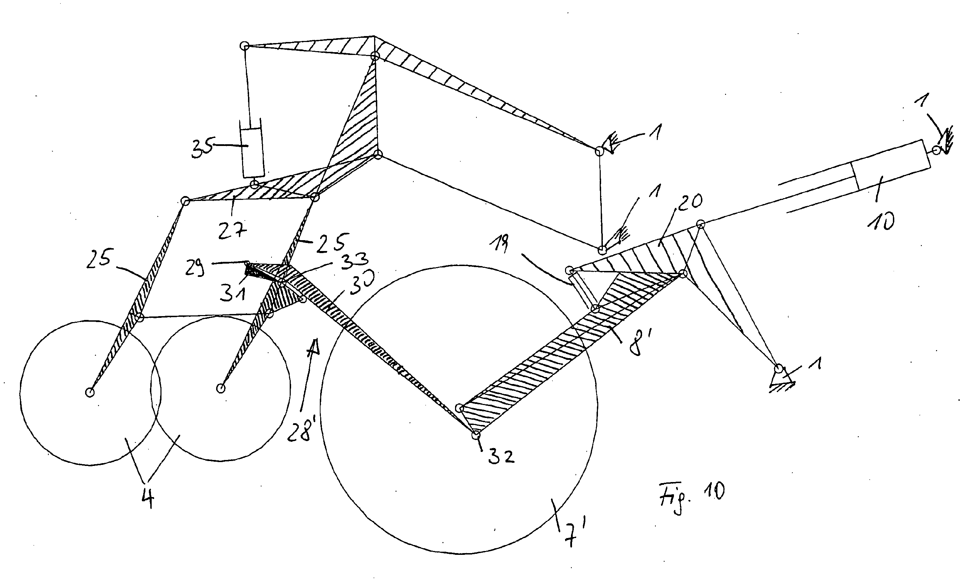

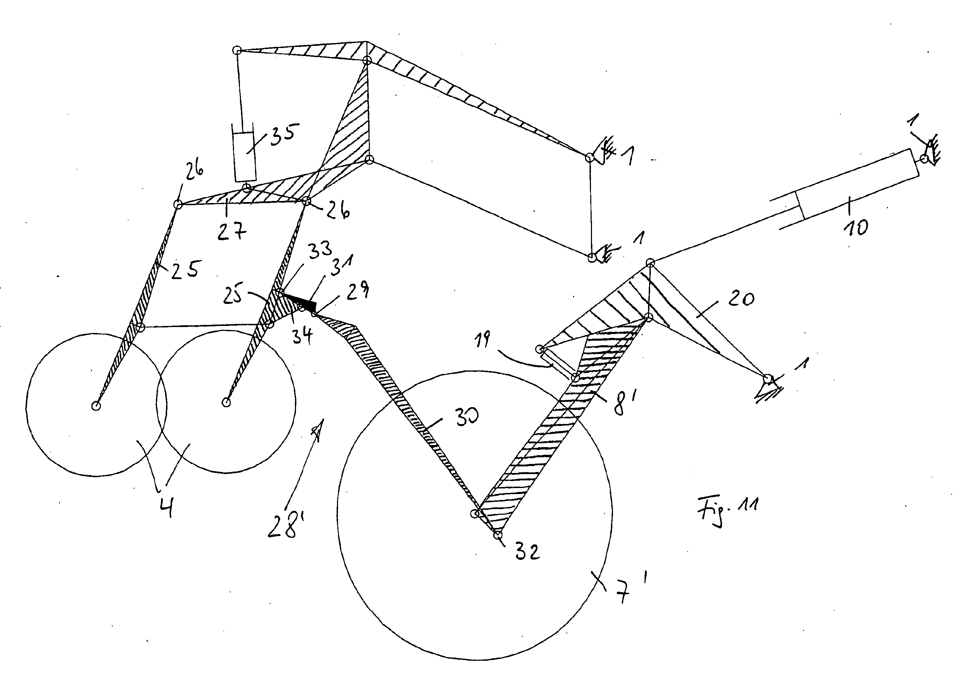

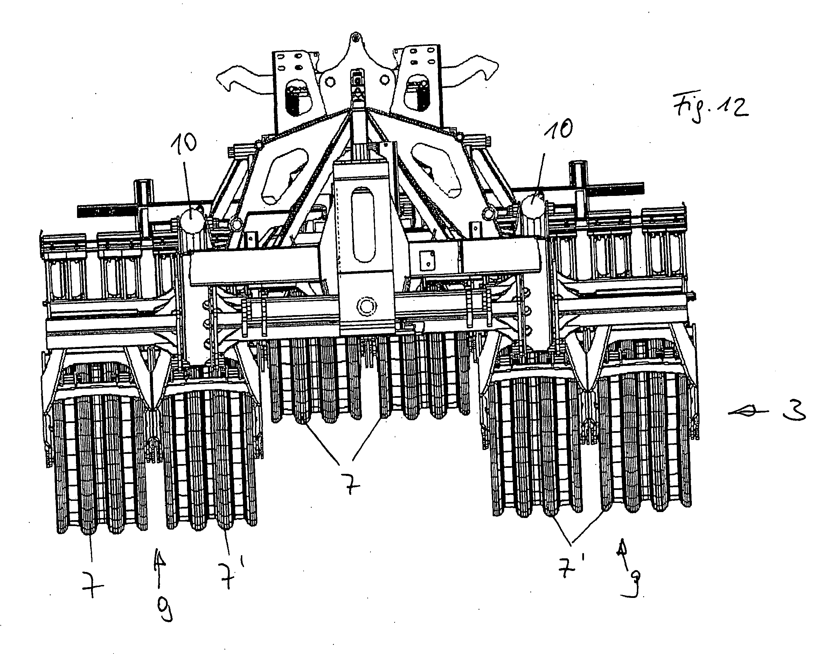

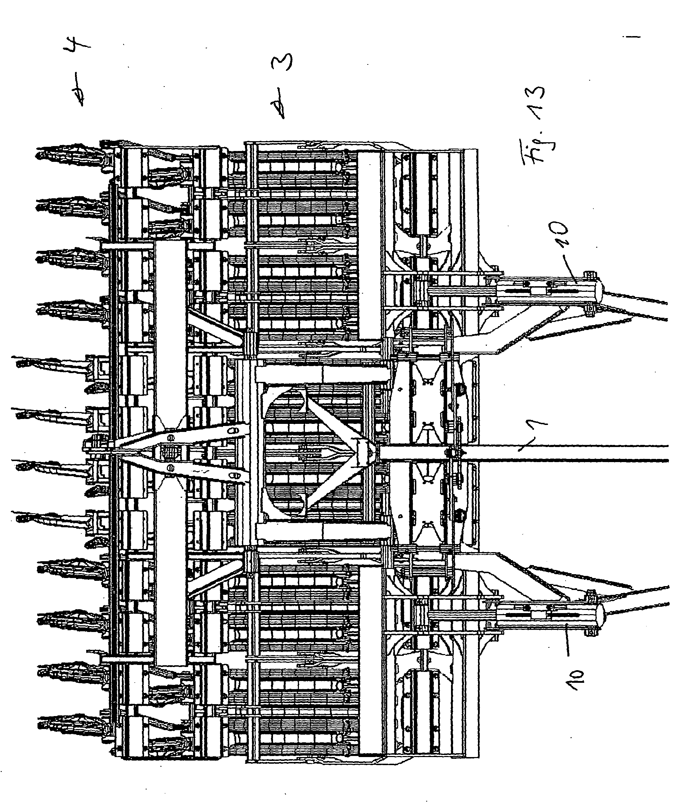

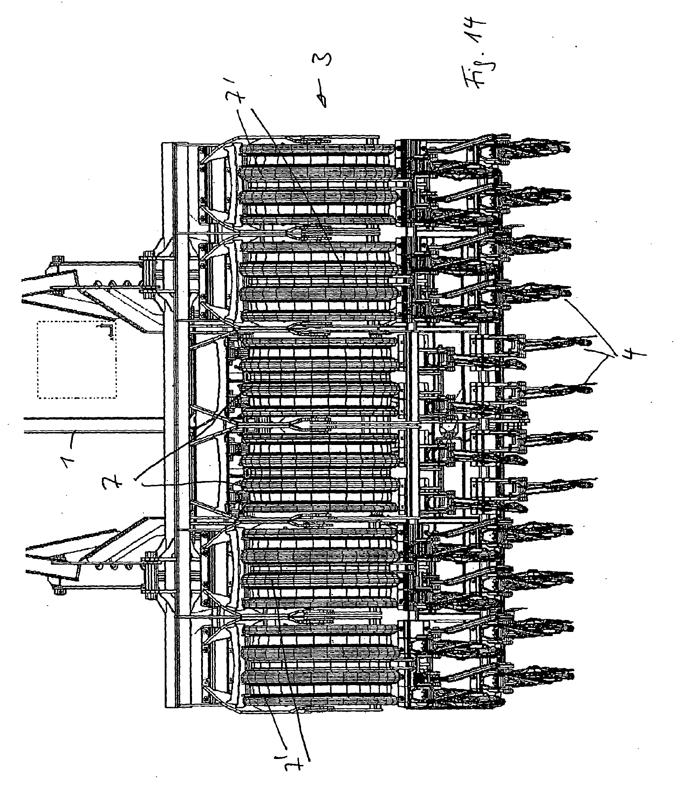

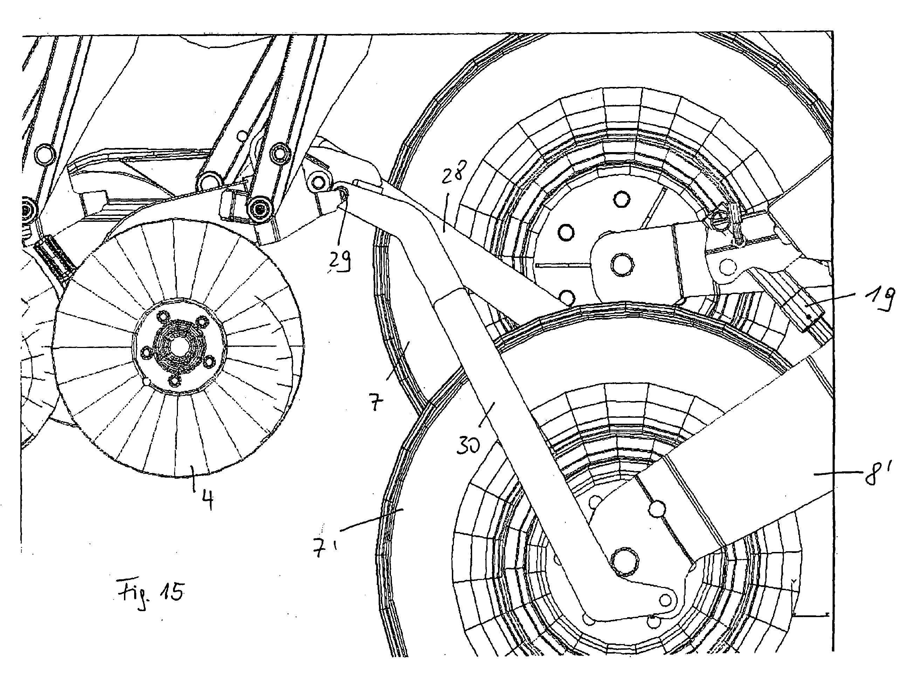

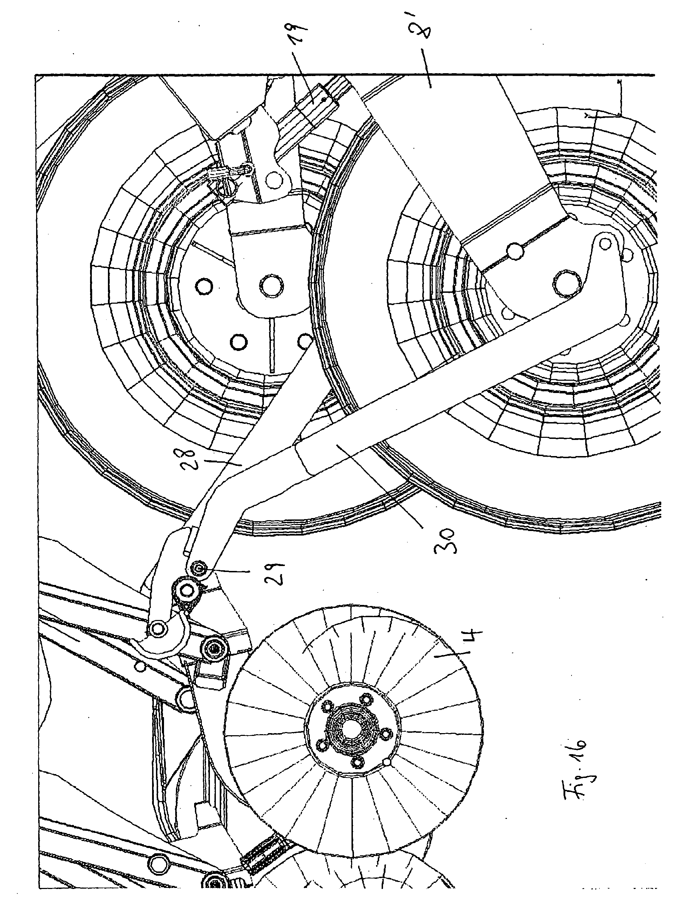

Beim Beaufschlagen der Fahrwerkszylinder 10 mit Öldruck fahren diese aus und senken die Reifenelemente 7' gegenüber den übrigen Reifenelementen 7 ab. Hierbei wird der Schwenkrahmen mit den Schwenkarmen der das Fahrwerk 9 bildenden Reifenelemente 7' in Pfeilrichtung 17 verschwenkt. Hierbei werden die Verbindungsstangen 28;30,31 auseinander gezogen, wie die Fig. 9-16 zeigen, so dass eine Relativbewegung zwischen Säscharen 4 und Reifenelementen 7' des Fahrwerkes 9 stattfindet. Bei dem umgekehrten Vorgang, d.h. bei dem Bringen der Reifenelemente 7' des Fahrwerks 9 aus der Fahrwerk- bzw. Transportstellung in die Arbeitsstellung, zieht die Feder die Teilstangen 30,31 der Verbindungselemente in die in die Fig. 2-8 dargestellte Position zusammen, so dass in Arbeitsstellung des Gerätes die Reifenelemente 7' des Fahrwerkes 9 genauso wie die übrigen Reifenelemente 7 die den jeweiligen Reifenelementen 7 zugeordneten Säschare 4 in der Tiefe führen können.

## Patentansprüche

1. Landwirtschaftliches Bodenbearbeitungs- und/oder Bestellgerät mit zumindest einer auf dem Boden abrollenden Reifenelemente aufweisenden Bodenwalze, wobei einige der Reifenelemente als Fahrwerk zum Transport des Gerätes auf der Straße nutzbar und gegenüber den übrigen Reifenelemente in eine die übrigen Reifenelementen nach unten überragende Position bringbar sind, wobei die Reifenelementen mittels in aufrechter Ebene bewegbaren Schwenkarmen gegenüber dem Tragrahmen bewegbar angelenkt sind und die dem Fahrwerk zugeordneten Schwenkarme mittels motorischer Stellelemente gegenüber den übrigen Schwenkarmen zum Anheben des Bodenbearbeitungsgerätes nach unten verschwenkbar sind, **dadurch gekennzeichnet, dass** die Schwenkarme (8) der Reifenelemente (7') des Fahrwerkes (9) an in aufrechter Ebene bewegbar angeordneten Zwischenschwenkarmen (11), die am Tragrahmen (1) angelenkt sind, mittels Gelenke (12) angeordnet sind, dass die Stellelemente (10) zwischen dem Tragrahmen (1) und den Zwischenschwenkarmen (11) angeordnet sind, dass zwischen den Zwischenschwenkarmen (11) und den Schwenkarmen (8')der Reifenelemente (7') des Fahrwerkes (9) in der Fahrwerksposition der Reifenelemente (7) wirksame Anschlagelemente (24) angeordnet sind, dass die Zwischenschwenkarme vor den Reifenelementen (7) am Tragrahmen (1) angelenkt sind, dass die Schwenkarme (8') hinter dem Anlenkpunkt (15,16) der Zwischenschwenkarme (11) an dem Tragrahmen (1) an den Zwischenschwenkarmen (11) angelenkt sind.

2. Gerät nach Anspruch 1, **dadurch gekennzeichnet, dass** die Hydraulikzylinder (19) des Druckausgleichsystems (18) zwischen den Schwenkarmen (8') und dem Zwischenschwenkarmen (11) angeordnet sind.

3. Gerät nach Anspruch 1, **dadurch gekennzeichnet, dass** die einer Fahrwerksseite zugeordneten Zwischenschwenkarme (11) mittels Querträgern (13) zu einem Schwenkrahmen verbunden sind.

4. Gerät nach Anspruch 5, **dadurch gekennzeichnet, dass** das Stellelement (10) des Fahrwerkes (9) an dem Schwenkrahmen angreift.

5. Gerät nach einem oder mehreren der vorstehenden Ansprüche, **dadurch gekennzeichnet, dass** die motorischen Stellelemente als Hydraulikzylinder (10) ausgebildet sind.

6. Gerät nach einem oder mehreren der vorstehenden Ansprüche, **dadurch gekennzeichnet, dass** die Zwischenschwenkarme (11) als Kipphebel ausgebildet sind.

7. Gerät nach Anspruch 2, **dadurch gekennzeichnet, dass** die Hydraulikzylinder (19) des Druckausgleichsystems (18) an dem Zwischenschwenkrahmen (11) dem Anlenkpunkt des Zwischenrahmens (11) an dem Tragrahmen (1) abgewandten Ende (20) angeordnet sind.

8. Gerät nach einem oder mehreren der vorstehenden Ansprüche, **dadurch gekennzeichnet, dass** die Zwischenschwenkarme (11) und die Schwenkarme (8') um ihre Schwenkachsen von der Arbeitsin die Fahrwerksposition nach vorn- unten verschwenkbar sind.

9. Gerät nach Anspruch 1, **dadurch gekennzeichnet, dass** die zwischen den das Fahrwerk (9) bildenden Reifenelementen (7') und den zugeordneten Säscharen (4) angeordneten Verbindungselemente (28',30,31) längenveränderbar ausgebildet sind.

10. Gerät nach Anspruch 9, **dadurch gekennzeichnet, dass** die Verbindungsstangen (28') aus zwei gelenkig miteinander verbundenen Teilstangen (30,31) bestehen.

11. Gerät nach Anspruch 10, **dadurch gekennzeichnet, dass** ein zwischen den beiden Teilstangen (30,31) wirksames Federelement angeordnet ist, welches die Teilstangen (30,31) zusammen zieht.

12. Gerät nach Anspruch 9, **dadurch gekennzeichnet, dass** die Verbindungsstange (28') aus zwei zueinander teleskopierbaren Teilstangen bestehen.

13. Gerät nach Anspruch 1 mit einer Hydraulikanlage, **dadurch gekennzeichnet, dass** jeder Fahrwerkseite ein doppeltwirkender Hydraulikzylinder (10), die mit einer Hydraulikanlage (45) verbunden sind, zugeordnet ist, dass die Hydraulikzylinder (19) des Druckausgleichsystems (18) für die Reifenelemente (7) in einem geschlossenen Leitungssystem angeordnet sind, dass in dem Leitungssystem des Druckausgleichsystems (18) zumindest ein doppeltwirkender Hydraulikzylinder als Ausgleichszylinder (36) angeordnet ist, dass der Ausgleichszylinder (36) mit seiner einen Kammer mit dem Druckausgleichssystem (18) und mit seiner anderen Kammer mit der das Fahrwerk (9) in Arbeitsstellung des Gerätes bringenden Kammer des Fahrwerkzylinders (10) verbunden ist.

14. Gerät nach Anspruch 13, **dadurch gekennzeichnet, dass** die Hydraulikzylinder (19) des Druckausgleichsystems (18) für die Reifenelemente (7,7') jeder Hälfte des Gerätes in einem geschlossenen Leitungssystem angeordnet sind, das in jedem Leitungssystem des Druckausgleichsystems (18) zumindest ein doppeltwirkender Hydraulikzylinder als Ausgleichszylinder (36) angeordnet ist.

15. Gerät nach Anspruch 13, **dadurch gekennzeichnet, dass** ein weiterer Hydraulikzylinder (35) zwischen dem Scharrahmen und dem Tragrahmen (1) angeordnet ist, dass dieser dem Scharrahmen zugeordnete Hydraulikzylinder (35) mit den Hydraulikanschlüssen für den Fahrwerkszylinder (10) verbunden ist.

## Claims

1. Agricultural ground cultivating device and/or cultivating combination with at least one ground roller that includes tyre elements that roll on the ground, wherein some of the tyre elements can be used as a framework for transporting the device on the road and are moveable, relative to the remaining tyre elements, into a position projecting downwards beyond the remaining tyre elements, wherein the tyre elements are pivotally mounted so as to be displaceable relative to the supporting frame by means of pivot arms that are moveable In an upright plane and the pivot arms associated with the framework are pivotable downwards relative to the remaining pivot arms by means of motor-driven adjusting elements for raising the ground cultivating device, **characterised in that** the pivot arms (8) of the tyre elements (7') of the framework (9) are disposed by means of pivot jointe (12) on intermediate pivot arms (11), which are disposed so as to be displaceable in an upright plane and are pivotally mounted on the supporting frame (1), **in that** the adjusting elements (10) are disposed between the supporting frame (1) and the intermediate pivot arms (11), **in that** stop elements (24), which are operative in the framework position of the tyre elements (7), are disposed between the intermediate pivot arms (11) and the pivot arms (8') of the tyre elements (7') of the framework (9), **in that** the intermediate pivot arms are pivotally mounted in front of the tyre elements (7) on the supporting frame (1), **in that** the pivot arms (8') are pivotally mounted on the intermediate pivot arms (11) behind the pivot point (15, 16) of the intermediate pivot arms (11) on the supporting frame (1).

2. Device according to claim 1, **characterised in that** the hydraulic cylinders (19) of the pressure compensation system (18) are disposed between the pivot arms (8') and the intermediate pivot arms (11).

3. Device according to claim 1, **characterised in that** the intermediate pivot arms (11) that are associated with one side of the framework are connected to a pivot frame by means of cross bearers (13).

4. Device according to claim 5(?), **characterised in that** the adjusting element (10) of the framework (9) engages the pivot frame.

5. Device according to one or more of the preceding claims, **characterised in that** the motor-driven adjusting elements are in the form of hydraulic cylinders (10).

6. Device according to one or more of the preceding claims, **characterised in that** the intermediate pivot arms (11) are in the form of a rocker arm.

7. Device according to claim 2, **characterised in that** the hydraulic cylinders (19) of the pressure compensation system (18) on the intermediate pivot frame (11) are disposed at the pivot point of the intermediate frame (11) at the end (20) remote from the support frame (1).

8. Device according to one or more of the preceding claims, **characterised in that** the intermediate pivot arms (11) and the pivot arms (8') are pivotable forwards and downwards about their pivotal axes from the operating position into the framework position.

9. Device according to claim 1, **characterised in that** the connecting elements (28', 30, 31) that are disposed between the tyre elements (7') forming the framework (9) and the associated sowing coulters (4) are longitudinally adjustable.

10. Device according to claim 9, **characterised in that** the connecting rods (28') comprises two part rods (30, 31) that are interconnected in a pivoting manner.

11. Device according to claim 10, **characterised in that** there is disposed a spring element that is operative between the two part rods (30, 31) and draws the part rods (30, 31) together.

12. Device according to claim 9, **characterised in that** the connecting rods (28') comprise two parts rods that are telescopic one relative to the other.

13. Device according to claim 1 with a hydraulic system, **characterised in that** a double action hydraulic cylinder (10) is associated with each side of the framework and the said hydraulic cylinders are connected to a hydraulic system (45), **in that** the hydraulic cylinders (19) of the pressure compensation system (18) for the tyre elements (7) are disposed in a closed line system, **in that** at least one double action hydraulic cylinder is disposed as compensating cylinder (36) in the line system of the pressure compensation system (18), **in that** the compensating cylinder (36) is connected with its one chamber to the pressure compensation system (18) and with its other chamber to the chamber of the framework cylinder (10) moving the framework (9) into the operating position of the device.

14. Device according to claim 13, **characterised in that** the hydraulic cylinders (19) of the pressure compensation system (18) for the tyre elements (7, 7') of each half of the device are disposed in a closed line system, **in that** at least one double action hydraulic cylinder is disposed as compensating cylinder in each line system of the pressure compensation system (18).

15. Device according to claim 13, **characterised in that** an additional hydraulic cylinder (35) is disposed between the coulter frame and the supporting frame (1), **in that** the said hydraulic cylinder (35) that is associated with the coulter frame is connected to the hydraulic connections for the framework cylinder (10).

## Revendications

1. Appareil agricole pour cultiver et/ ou travailler le sol, comportant au moins un cylindre de sol muni d'éléments pneumatiques roulant sur le sol, certains des éléments pneumatiques pouvant servir pour la circulation routière comme châssis de roulement pour transporter l'appareil, ces éléments étant mis dans une position dépassant celle des autres éléments pneumatiques,
les éléments pneumatiques étant articulés de manière mobile par rapport au châssis de support par des bras pivotant dans des plans verticaux et en ce que les bras pivotants associés au châssis de roulement étant pivotés vers le bas par des éléments actionneurs à moteur associés au bras pivotants du châssis de roulement, par rapport au bras pivotant servant à soulever l'appareil pour le travail du sol,
**caractérisé en ce que**
les bras pivotants (8) des éléments pneumatiques (7') du châssis de roulement (9) sont articulés sur des bras pivotants intermédiaires (11) mobiles dans des plans verticaux, ces bras intermédiaires étant articulés sur le châssis de support (1) par l'intermédiaire d'articulations (12),
les éléments actionneurs (10) étant installés entre le châssis de support (1) et les bras pivotants intermédiaires (11),
des éléments de butée (24) étant installés entre les bras pivotants intermédiaires (11) et les bras pivotants (8') des éléments pneumatiques (7') du châssis de roulement (9) lorsque les éléments pneumatiques (7') sont en position de châssis de roulement,
les bras intermédiaires étant articulés en avant des éléments pneumatiques (7) sur le châssis de support (1),
les bras pivotants (8') étant articulés sur les bras pivotants intermédiaires (11) derrière le point d'articulation (15, 16) des bras pivotants intermédiaires (11) sur le châssis de support (1).

2. Appareil selon la revendication 1,
**caractérisé en ce que**
les vérins hydrauliques (19) du système de compensation de pression (18) sont installés entre les bras pivotants (8') et les bras pivotants intermédiaires (11).

3. Appareil selon la revendication 1,
**caractérisé en ce que**
les bras pivotants intermédiaires (11) associés à un côté du châssis de roulement sont reliés par des poutres transversales (13) pour former un châssis pivotant.

4. Appareil selon la revendication 5,
**caractérisé en ce que**
l'élément d'actionnement (10) du châssis de roulement (9) agit sur le châssis pivotant.

5. Appareil selon l'une ou plusieurs des revendications précédentes,
**caractérisé en ce que**
les éléments d'actionnement à moteur sont des vérins hydrauliques (10).

6. Appareil selon l'une ou plusieurs des revendications précédentes,
**caractérisé en ce que**
les bras intermédiaires (11) sont réalisés sous la forme de leviers de basculants.

7. Appareil selon la revendication 2,
**caractérisé en ce que**
les vérins hydrauliques (19) du système de compensation de pression (18) sont prévus sur le châssis pivotant intermédiaire (11) à l'extrémité (20) opposé au point d'articulation du châssis intermédiaire (11) sur le châssis de support (1).

8. Appareil selon une ou plusieurs des revendications précédentes,
**caractérisé en ce que**
les bras pivotants intermédiaires (11) et les bras pivotants (8') peuvent être pivotés vers l'avant et vers le bas autour de leur axe de pivotement à partir de la position de travail dans la position de châssis de roulement.

9. Appareil selon la revendication 1,
**caractérisé en ce que**
les éléments de liaison (28', 30, 31) installés entre les éléments pneumatiques (7') formant le châssis de roulement (9) et les socs de charrue (4) correspondants sont de longueur réglable.

10. Appareil selon la revendication 9,
**caractérisé en ce que**
les barres de liaison (28') sont formées de deux parties de barre (30, 31) reliées de manière articulée l'une à l'autre.

11. Appareil selon la revendication 10,
**caractérisé par**
un élément de ressort agissant entre les deux parties de barres (30, 31), pour rétracter les deux parties de barres (30, 31) l'une contre l'autre.

12. Appareil selon la revendication 9,
**caractérisé en ce que**
la barre de liaison (28') se compose de deux parties de barre à mouvement télescopique l'une par rapport à l'autre.

13. Appareil selon la revendication 1, comportant une installation hydraulique,
**caractérisé en ce qu'**
à chaque côté du châssis de roulement est associé un vérin hydraulique (10) à double effet, et ces vérins sont reliés à une installation hydraulique (45),
les vérins hydrauliques (19) du système de compensation de pression (18) appartenant à un système de conduite fermée pour les éléments pneumatiques (7),
et dans ce système de conduite du système de compensation de pression (18), au moins un vérin hydraulique à double effet est un vérin de compensation (36),
le vérin de compensation (36) est relié par l'une de ses chambres au système de compensation de pression (18) et par son autre chambre au vérin de châssis de roulement (10) qui met le châssis de roulement (10) de l'appareil en position de travail.

14. Appareil selon la revendication 13,
**caractérisé en ce que**
les vérins hydrauliques (19) du système de compensation de pression (18) des éléments pneumatiques (7, 7') de chaque moitié de l'appareil font partie d'un système de conduite fermé, et à chaque système de conduite du système de compensation de pression (18) est associé au moins un vérin hydraulique à double effet fonctionnant comme vérin de compensation (36).

15. Appareil selon la revendication 13,
**caractérisé par**
un autre vérin hydraulique (35) entre le soc de charrue et le châssis de support (1), et celui-ci est relié au vérin hydraulique associé au soc de charrue par les branchements hydrauliques des vérins (10) du châssis de roulement.
